# EUROPEAN PATENT SPECIFICATION

(11) **EP 1 723 576 B1**
(45) Date of publication and mention of the grant of the patent: **21.09.2011**
(21) Application number: 05723764.6
(22) Date of filing: 28.02.2005
(51) Int. Cl.: G06K 7/00, G02F 1/00, G02B 6/00

(54) **SYSTEM AND METHOD FOR READING OPTICAL CODES IMPRINTED ON OR DISPLAYED ON REFLECTIVE SURFACES**
SYSTEM UND VERFAHREN ZUM LESEN OPTISCHER CODES, DIE AUF REFLEKTIERENDE OBERFLÄCHEN AUFGEDRUCKT ODER DARAUF ANGEZEIGT WERDEN
SYSTEME ET PROCEDE POUR LA LECTURE DES CODE OPTIQUES IMPRIMES OU AFFICHES SUR DES SURFACES REFLECHISSANTES

(30) Priority: 02.03.2004 US 791018; 01.06.2004 US 858247
(43) Date of publication of application: 22.11.2006
(73) Proprietor: Symbol Technologies, Inc., Holtsville, NY 11742-1300 (US)
(72) Inventor: HE, Duanfeng, South Setauket, NY 11720 (US); JOSEPH, Eugene, B., Coram, NY 11727 (US)
(74) Representative: Geyer, Ulrich F.
(86) International application number: PCT/US2005/006045
(87) International publication number: WO 2005/086071

(56) References cited:
- WO-A-01/65469
- WO-A-92/16909
- US-A1- 2002 000 472

## Description

### BACKGROUND OF THE INVENTION

### Field of the Invention

This invention relates to imaging using optical code reading devices. In particular, this invention relates to a system and method for reading optical codes imprinted on reflective surfaces.

### Description of the Prior Art

As industry has continued to refine and improve production techniques and procedures, corresponding requirements have been levied for placing identifying data related markings upon components of manufactured assemblies. These markings enable tracking of, for example, the historical stages of a product's manufacture. Further, these markings enable components of complex machinery, such as automobiles and the like, to be identified, for example, during manufacture by quality control personnel, during the course of an investigation by governmental authorities, etc.

A variety of product marking approaches has been utilized in industry. For example, paper tags or labels carrying UPC codes are typically applied to components in the course of a product's assembly. This method provides identifying codes that are highly readable by prior art optical code readers. However, for many applications, such tags or labels may be lost, damaged or altered, thereby, rendering the coding useless. This shortcoming is well addressed by Direct Part Marking (DPM) and consequently DPM has gained widespread acceptance in industrial applications by providing durable markings, or code symbols, capable of being placed on a wide variety of surfaces.

In DPM, a physical part, be it made of metal, plastic, glass or other material, is marked directly with a 2D identification symbol preferably by either an etching or dot-peening process. However, as a result of being etched directly onto a wide variety of material surfaces and textures, such as reflective or dark surfaces, contrast between the symbol and the background surface is not controllable and poor contrast is often the norm. In such cases, any contrast is obtained from the interaction between the illuminating light source and the different surface profiles and textures, therefore, proper illumination, not readily found in prior art barcode scanners, is essential for the accurate reading and decoding of the DPM code symbol.

Generally, prior art imaging scanners are designed for scanning paper-based optical codes. Paper's superb omni-directional scattering property covers up much of the traces of the structure in the light source. However, the parts that are the object of the present invention may have surfaces of entirely different characteristics. In some cases, a smooth part surface may form a reflected image of the light source and causing the DPM symbol to appear washed-out or even indiscernible from its surroundings; in such circumstances, an extended light source, providing a large and uniform emission surface, would be desirable.

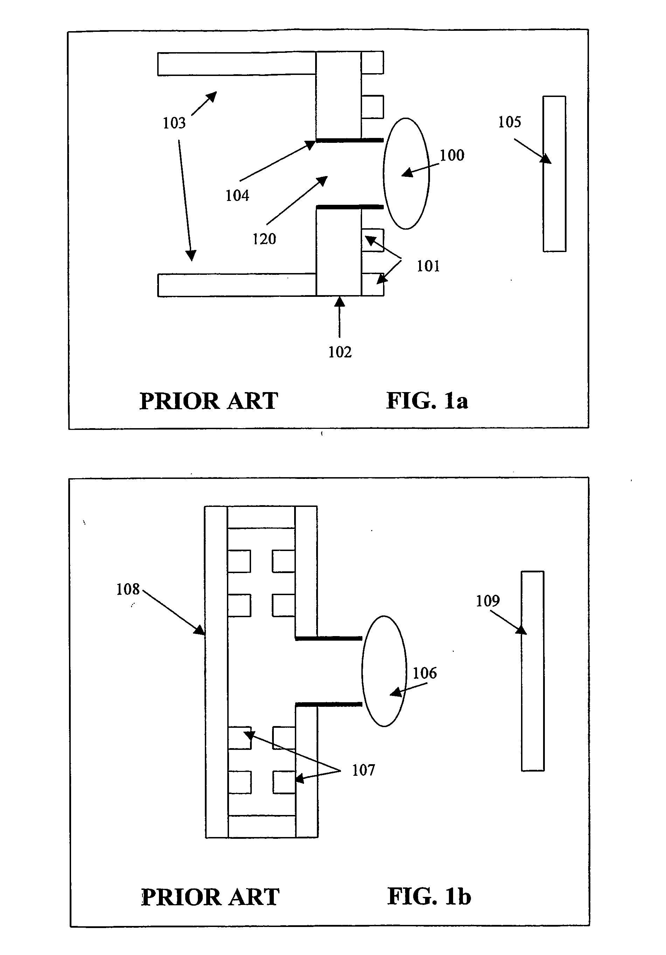

One commercially available prior art DPM scanner (see Prior Art FIG 1a) provides an extended light source and covers multiple angles. However, this system has two limitation of particular interest with regards to the present invention. First, this system is relatively large, making the scanner cumbersome and generally, unsuitable for integration with handheld computing devices, i.e. PDAs. Second, the translucent diffusing plate used by this system has to be relatively thick to be effective at providing a large and uniform emission surface. The overly thick diffusing plate, however, is especially inefficient at transmitting light, consequently, requiring more powerful illumination than would be necessary with a thinner diffusing plate.

In other instances, DPM images taken with direct point sources would produce the best contrast, especially for DPM marks made using dot-peening methods. Dot-peening is the method of repeatedly impacting the part surface with a sharp tool, thus, forming indentations on the surface. The indentations tend to reflect light at angles substantially similar to the incident angles of the illumination source. Another prior art DPM scanner (shown in Prior Art FIG.1b) combines the extended light source method described above with a direct point source method. However, this scanner is even larger than the extended light source DPM scanner described previously. A prior art bar code scanner comprising an extended light source has been disclosed by WO 01/65469.

### SUMMARY OF THE INVENTION

It is an aspect of the present invention to provide a system and method for reading optical codes as described in the attached claims.

### BRIEF DESCRIPTION OF THE DRAWINGS

These and other features, aspects, and advantages of the present invention will become better understood with reference to the below listed drawings, and detailed description of the invention:
FIG. 1a-b illustrate two prior art DPM optical reading systems;
FIG. 2a illustrates a DPM optical code reading system in accordance with an example ;
FIG. 2b-c illustrate alternate configurations of the DPM optical code reading system of FIG. 2a;
FIG. 3 illustrates a handheld DPM optical code reading unit in accordance with an example ;
FIG. 4 illustrates a DPM optical code reading system having a PDA form-factor in accordance with the present invention;
FIG. 5 illustrates a DPM optical code reading system having a cellular phone form-factor in accordance with the present invention; and
FIG. 6 illustrates the steps performed by software controlling the PDA in FIG. 4 and the cellular phone of FIG. 5 in accordance with the present invention.

### DETAILED DESCRIPTION OF THE PREFERRED EMBODIMENTS

The present invention is particularly suited for reading and decoding optical codes corresponding to a wide range of standardized 1-D and 2-D symbologies. The present invention can also be configured for incorporation within various devices, such as a PDA and mobile phone for image processing and analysis. The present invention is discussed with a particular emphasis on imaging, reading and decoding DPM codes, especially DPM codes imprinted or displayed on reflective surfaces, such as LCD screens found on mobile phones, PDAs and laptop computers.

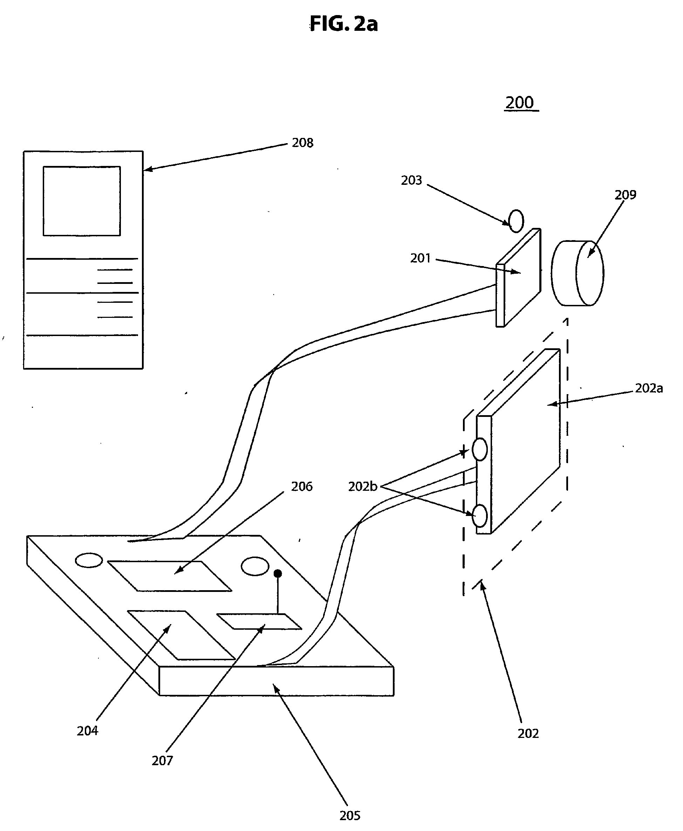

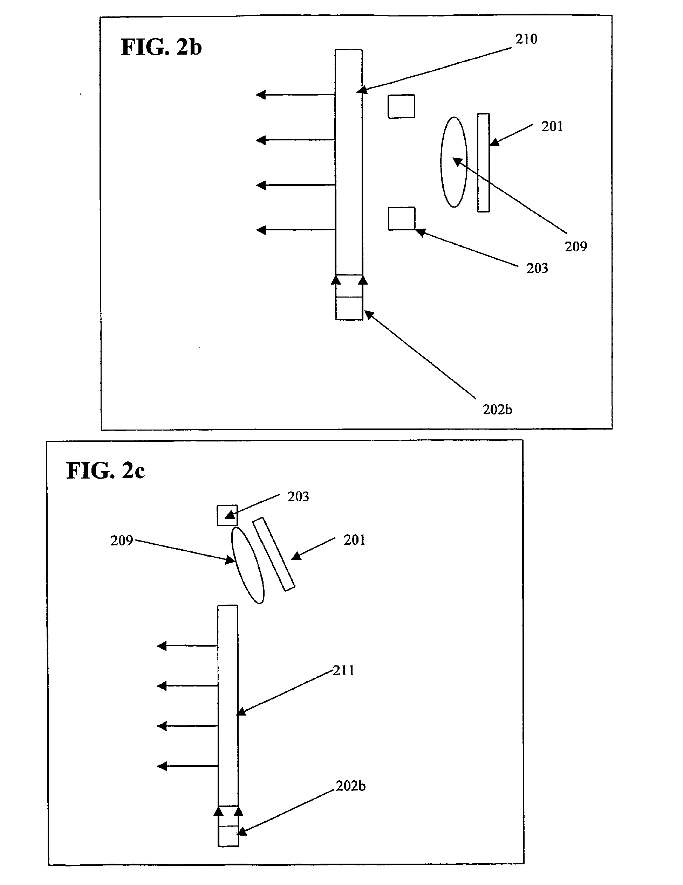

With reference to FIG. 2a, there is shown a system and method according to an example and designated generally by reference numeral 200. The system 200 includes an image sensor 201, such as a color image sensor, an extended light source 202 having a diffusing plate 202a, which may be configured as either a frontlight or backlight unit (see below and FIGs. 2b and 2c), and at least one LED 202b, a second LED acting as a direct point light source 203, and a processor 204 providing the decoding functionality (and additional control functions) and situated on a logic board 205 containing the necessary support circuitry for data storage 206 and communication 207 with external systems, such as a host computer, printer, etc., collectively referred to herein by numeral 208. The image sensor can be fitted with an auto-focus assembly 209, as known in the art, thereby allowing a greater operating or working range and sharper imaging of optical codes. When imaging an optical code displayed on an LCD screen or other reflective surface, the extended light source 202 provides the illumination, while the direct point light source 203 is best suited for illuminating optical codes on non-reflective surfaces.

As shown in FIG. 2b, an alternate implementation of the example shown in FIG. 2a using a frontlight unit 210 as the diffusing plate calls for two sets of LED light sources 202b and 203. One LED set 202b transmits light significantly into the frontlight unit 210, which in turn transmits the light substantially in one direction outward and away from the lens 209. The other LED set 203 transmits its light through the frontlight 210 to illuminate the object directly. The two sets of light sources 202b and 203 are used alternatively, under the control of a processor 204. For a design for read codes displayed on a mobile-phone screen, the second set of LEDs 203 are not required. The frontlight unit 210 can be designed to couple light from the LEDs 202b fairly efficiently, and to output light rather uniformly. Commercial frontlight units are readily available. Additionally, custom frontlights may be specially designed to meet specific form-factor dimensional constraints.

Another configuration of the example in FIG. 2a, using a backlight assembly 211 as the diffusing plate, is shown in FIG. 2c. The difference between a frontlight 210 and a backlight 211 are twofold: a backlight assembly 211 is not transparent so the camera 201 cannot reside behind it. However, since the backlight assembly can, and usually does, incorporate a mirror (not shown) on the back, it has less design compromises and can be made more efficiently and more economically. The lens 209 is tilted somewhat so that the object can be placed more centered in respect to the light source.

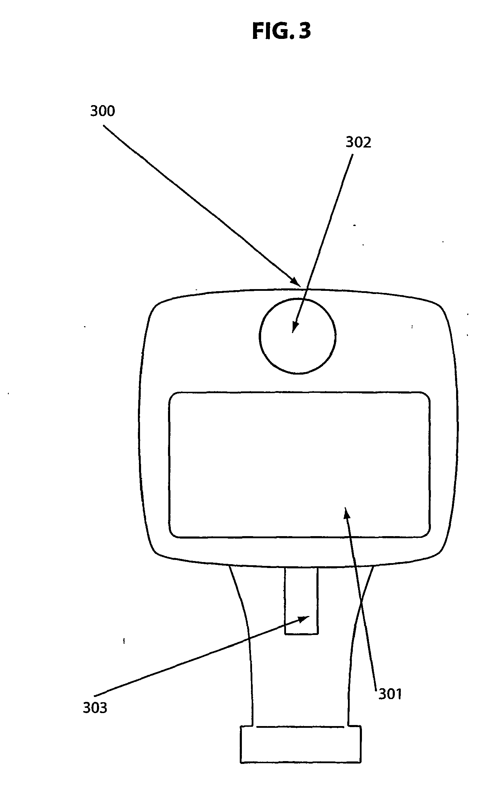

FIG. 3 illustrates a DPM optical code reader handheld unit 300 housing the various components of the example as shown in FIGs. 2a-c. The handheld unit 300 is configured and dimensioned as a "pistol form factor" commonly employed in the field of optical code readers. The front section of the handheld unit 300 provides a camera/imaging assembly 302 and a backlight unit 301. However, as discussed previously, the backlight unit 301 alternatively may be a frontlight unit, in which case the camera may be positioned behind the frontlight (see FIG. 2b). DPM scanning is initiated by depressing the trigger 303, which activates the backlight unit 301 and camera/imaging assembly 301. Communication between the handheld unit 300 and a host computer, etc. may be provided by either a wireless system or an interface cable. The wireless version is equipped with a battery power supply, preferably rechargeable, while the interface cable version can obtain the required power via conductors within the cable.

Additionally, if the handheld unit 300 is provided with a direct point light source on the front section, controls (not shown) may be added to the handheld unit 300 allowing the operator to select between the two illumination methods. The backlight unit 301 also may be color adjustable, providing the operator with a number of illumination colors. The various illumination colors are provided for functional purposes; codes imprinted on certain surfaces may be more visible under one wavelength of light than under another thus providing multiple wavelengths allows the operator to select the color best suited for the particular application.

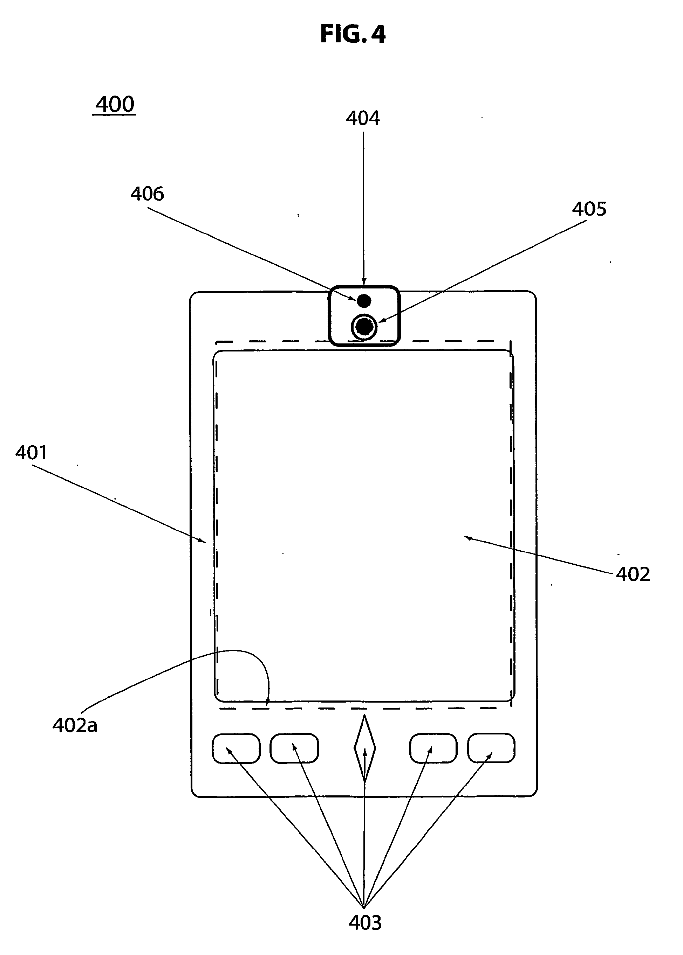

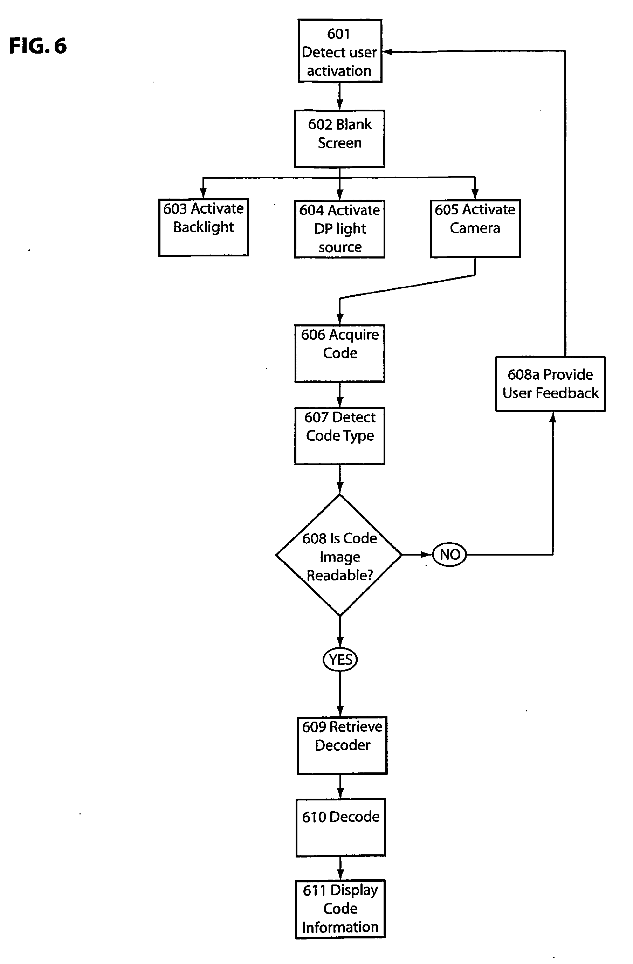

In an embodiment, as illustrated in FIG. 4, the present invention is incorporated within a PDA 400. The PDA housing 401 contains a built-in camera 405 housed within a swivel-able assembly 404 and at least one direct point light source 406 also housed within the swivel-able assembly 404, as well as an LCD screen 402 with a backlight assembly 402a. The built-in camera may advantageously be equipped with an auto-focus system as known in the art. Additionally, the PDA housing 401 has several buttons 403 and may have a touch sensitive membrane (not shown) overlying the LCD screen 402, providing user interaction with the PDA 400. The PDA 400 additionally contains the necessary software for controlling the backlight 402a, direct point source 406 and built-in camera 405, and processing and decoding the code images obtained with the built-in camera 405. The steps performed by this software is illustrated, in greater detail, in the flowchart of FIG. 6 and described below.

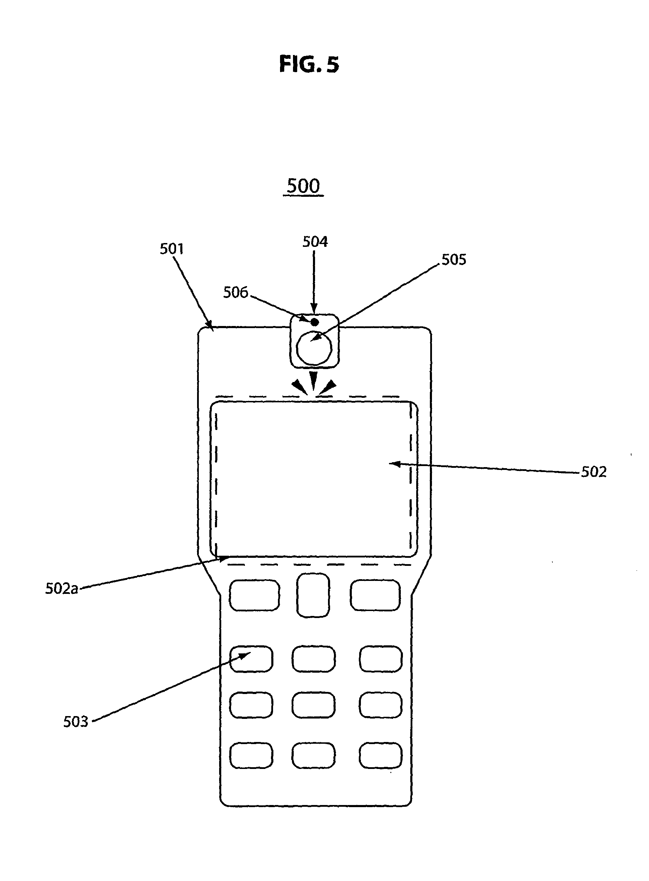

In another embodiment, the present invention is part of a cellular phone 500 as shown in FIG. 5. The cellular phone housing 501 contains a built-in camera 505 housed within a swivel-able assembly 504 and at least one direct point light source 506 also housed within the swivel-able assembly 504, as well as an LCD screen 502 with a backlight assembly 502a. Additionally, the cellular phone housing 501 has a standard keypad 503, providing user interaction with the cellular phone 500. The cellular phone 500 additionally contains the necessary software for controlling the backlight 502a, direct point source 506 and built-in camera 505, and processing and decoding the code images obtained with the built-in camera 505. The steps performed by this software is illustrated, in greater detail, in the flowchart of FIG. 6 and described below.

FIG. 6 illustrates the steps performed by software installed within the PDA and cellular phone embodiments of the present invention. The description below will refer to the PDA embodiment but applies equally to the cellular phone embodiment also. Step 601 initiates the scanning process by detecting the user's activation through the actuation of a predefined button from the set of several buttons 403. The program proceeds on to step 602, blanking the LCD screen 402. Step 603, activation of the backlight 402a, step 604, activation of the direct point light source 406, and step 605, activation of the camera 405, occur at substantially the same moment. Step 606 is performed next, acquiring the code image and passing the image on to step 607. In step 607, the code image is analyzed to determine decodability and code-type. Once the code-type is identified, the appropriate decoder algorithm is retrieved from internal memory in step 608. Step 609 proceeds with the decoding of the code image. The code information is displayed on the LCD screen 402. Additionally, the program can be configured to provide added functions such as: providing interactivity with a remote host computer via wireless communications for updating coded part information, providing connectivity to a printer, etc.

## Claims

1. An optical code reading system comprising:
a display screen (402; 502) with
an extended light source adapted for emitting an extended-beam light adapted for directly illuminating an optical code with an illuminating light, the extended light source including a backlight assembly (402a; 502a) ;
at least one direct point light source (406; 506) adapted for illuminating the optical code with narrow-beam light;
at least one image sensor (405; 505) adapted for sensing the illuminating light reflected by the optical code and generating signals related to at least one image of the optical code; and
at least one processor adapted for processing at least a portion of the signals, generating a decodable image corresponding to the signals and decoding at least a portion of the decodable image.

2. The optical code reading system as in claim 1, wherein the at least one processor is further configured for selectively operating one of the extended light source and the at least one direct point light source (406; 506).

3. The optical code reading system as in claim 2, wherein the at least one processor is further configured for determining at least one optical property of the imaged optical code, and the extended light source and the at least one direct point light source (406; 506) are selectively operated in accordance with the determined at least one optical property.

4. The optical code reading system as in claim 2, wherein the at least one processor is adapted to alternately operate the extended light source and the at least one direct point light source (406; 506) for respective consecutive imaging captures of a series of imaging captures by the optical code reading system (400; 500).

5. The optical code reading system as in claim 1, wherein the at least one processor is further configured for determining the imaged optical code's code-type, wherein the code-type is selected from the group comprising: a UPC code-type, a DataMatrix code-type or a QR code-type.

6. The optical code reading system as in claim 1, wherein at least a portion of the optical code reading system is configured and dimensioned to be included in a handheld device (400; 500) having a lens and an image sensor acting as a camera (405; 505) and a backlit display (402; 502) for displaying data and providing the extended light source.

7. The optical code reading system as in claim 6, wherein the handheld device is one of a handheld computer device (400) and a mobile phone (500).

8. The optical code reading system as in claim 1, wherein the extended light source further is adapted to provide illumination for the display of data on the display screen (402; 502) to a user.

9. The optical code reading system as in claim 1, further comprising at least one direct point light source (406; 506) positioned behind the extended light source for illuminating the optical code with narrow-beam light.

10. The optical code reading system as in claim 1, wherein the extended light source includes a plurality of LEDs and a lightpipe adapted for receiving light emitted by the plurality of LEDs and emitting the extended-beam light.

11. The optical code reading system as in claim 10, wherein at least a portion of the plurality of LEDs are packaged together in at least one LED light bar.

12. The optical code reading system of claim 1, further comprising an LCD positioned in front of or behind the extended light source.

13. A method for reading an optical code on a target surface comprising the steps of:
providing a display screen (402;502) with a backlight assembly;
controlling the emission of an extended-beam light and the emission of a narrow-beam light for selectively emitting at least one of the extended-beam light and the narrow-beam light;
dependent on said controlling step emitting (604) with said backlight assembly (402a; 502a) an extended-beam light towards the optical code for directly illuminating the optical code with an illuminating light; and/or
emitting (604) a narrow-beam light for illuminating the optical code;
sensing (606) the illuminating light reflected from the optical code;
generating (608) at least one image of the optical code corresponding to the sensed light; and
decoding (610) at least a portion of the at least one image.

14. The method as in claim 13, further comprising the step of determining at least one optical property of the imaged optical code.

15. The method as in claim 13, wherein the optical code is a UPC code, a Data Matrix code or a QR code.

16. The method as in claim 13, wherein the controlling step (622) further includes alternating between emitting the extended-beam light and emitting the narrow-beam light for respective consecutive imaging captures of a series of imaging captures.

17. The method as in claim 13, further comprising the step (604) of clearing data displayed on the display screen (402; 502) coupled to the backlight assembly prior to illuminating the optical code.

## Patentansprüche

1. Lesesystem für optische Codes, das Folgendes aufweist:
einen Anzeigebildschirm (402; 502) mit
einer externen Lichtquelle, die angepasst ist, um ein Licht mit ausgedehnten Strahl zu emittieren, das angepasst ist, um direkt einen optischen Code mit einem Beleuchtungslicht zu beleichten, wobei die ausgedehnte Lichtquelle eine Hintergrundbeleuchtungsanordnung (402a; 502a) aufweist;
zumindest eine Direktpunktlichtquelle (406; 506), die angepasst ist, um den optischen Code mit Licht mit einem schmalen Strahl zu beleuchten;
zumindest einen Bildsensor (405; 505), der angepasst ist, um das Beleuchtungslicht abzufühlen, das durch den optischen Code reflektiert wird und zum Erzeugen von Signalen bezüglich des zumindest einen Abbilds des optischen Codes; und
zumindest einen Prozessor, der angepasst ist, um zumindest einen Teil der Signale zu verarbeiten, um ein decodierbares Bild bzw. Abbild zugehörig zu den Signalen zu erzeugen und um zumindest einen Teil des decodierbaren Abbilds zu decodieren.

2. Lesesystem für optische Codes gemäß Anspruch 1, wobei der zumindest eine Prozessor ferner konfiguriert ist, um selektiv die ausgedehnte Lichtquelle und/oder die Direktpunktlichtquelle (406; 506) zu betreiben.

3. Lesesystem für optische Codes gemäß Anspruch 2, wobei der zumindest eine Prozessor ferner konfiguriert ist, um zumindest eine optische Eigenschaft des abgebildeten optischen Codes zu bestimmen, und der die ausgedehnte Lichtquelle und die zumindest eine Direktpunktlichtquelle (406; 506) selektiv betätigt, und zwar in Übereinstimmung mit der bestimmten, zumindest einen optischen Eigenschaft.

4. Lesesystem für optische Codes gemäß Anspruch 2, wobei der zumindest eine Prozessor angepasst ist, um abwechselnd die ausgedehnte Lichtquelle und die zumindest eine Direktpunktlichtquelle (406; 506) für entsprechende, aufeinanderfolgende Bilderfassungen einer Reihe von Bilderfassungen durch das Lesesystem (400; 500) für die optischen Codes, zu betätigen.

5. Lesesystem für optische Codes gemäß Anspruch 1, wobei der zumindest eine Prozessor ferner konfiguriert sind, um den Codetyp des abgebildeten optischen Codes zu bestimmen, wobei der Codetyp aus eine Gruppe ausgewählt wird, die Folgendes umfasst: einen UPC-Codetyp, einen DataMatrix-Codetyp oder einen QR-Codetyp.

6. Lesesystem für optische Codes gemäß Anspruch 1, wobei zumindest ein Teil des Lesesystems für optische Codes konfiguriert und dimensioniert ist, um in einer handgehaltenen Vorrichtung (400; 500) enthalten zu sein, die eine Linse und einen Bildsensor besitzt, der als eine Kamera (405; 505) dient, sowie eine hintergrundbeleuchtete Anzeige (402; 502) zum Anzeigen der Daten und zum Vorsehen der ausgedehnten Lichtquelle.

7. Lesesystem für optische Codes gemäß Anspruch 6, wobei die handgehaltene Vorrichtung entweder eine handgehaltene Computervorrichtung (400) oder ein Mobiltelefon (500) ist.

8. Lesesystem für optische Codes gemäß Anspruch 1, wobei die ausgedehnte Lichtquelle ferner angepasst ist, um eine Beleuchtung für die Anzeige der Daten des Anzeigebildschirms (402; 502) für einen Benutzer vorzusehen.

9. Lesesystem für optische Codes gemäß Anspruch 1, das ferner zumindest eine Direktpunktlichtquelle (406; 506) aufweist, die hinter der ausgedehnten Lichtquelle zum Beleuchten des optischen Codes mit Licht mit einem schmalen Strahl positioniert ist.

10. Lesesystem für optische Codes gemäß Anspruch 1, wobei die ausgedehnte Lichtquelle eine Vielzahl von LEDs und einen Lichtleiter aufweist, der Licht aufnimmt, das durch die Vielzahl der LEDs emittiert wird und das Licht mit ausgedehntem Strahl emittiert.

11. Lesesystem für optische Codes gemäß Anspruch 10, wobei der zumindest eine Teil der Vielzahl der LEDs zusammen mit zumindest einem LED-Lichtstab verpackt bzw. gebündelt ist.

12. Lesesystem für optische Codes gemäß Anspruch 1, das ferner eine Flüssigkristallanzeige bzw. LCD aufweist, die vor oder hinter der ausgedehnten Lichtquelle positioniert ist.

13. Verfahren zum Lesen eines optischen Codes auf einer Zieloberfläche, das die folgenden Schritte aufweist:
Vorsehen eines Anzeigebildschirms (402; 502) mit einer Hintergrundbeleuchtungsanordnung;
Steuern des Emittierens eines Lichts mit ausgedehntem Strahl und des Emittierens eines Lichts mit schmalem Strahl zum selektiven Emittieren von zumindest einem Licht mit ausgedehntem Strahl und/oder einem Licht mit schmalem Strahl;
abhängig von dem Steuerungsschritt, Emittieren (604) eines Lichts mit ausgedehntem Strahl mit der Hintergrundbeleuchtungsanordnung (402a; 502a) zu dem optischen Code hin, um den optischen Code direkt mit einem Beleuchtungslicht zu beleuchten; und/oder
Emittieren (604) eines Lichts mit schmalem Strahl zum Beleuchten des optischen Codes;
Abfühlen (606) des Beleuchtungslichts, das von dem optischen Code reflektiert wird;
Erzeugen (608) von zumindest einem Bild bzw. Abbild des optischen Codes gemäß dem abgefühlten Licht; und
Decodieren (610) von zumindest einem Teil des zumindest einen Bilds.

14. Verfahren gemäß Anspruch 13, das ferner den Schritt des Bestimmens von zumindest einer optischen Eigenschaft des abgebildeten optischen Codes aufweist.

15. Verfahren gemäß Anspruch 13, wobei der optische Code ein UPC-Code (UPC = Universal Product Code), ein DataMatrix-Code oder ein QR-Code (QR = Quick Response) ist.

16. Verfahren gemäß Anspruch 13, wobei der Steuerungsschritt (622) ferner das Abwechseln zwischen dem Emittieren von Licht mit ausgedehntem Strahl und dem Emittieren von Licht mit schmalem Strahl für entsprechende, aufeinanderfolgende Bilderfassungen einer Reihe von Bilderfassungen umfasst.

17. Verfahren gemäß Anspruch 13, das ferner den Schritt (604) des Löschens der Daten umfasst, die auf dem Anzeigebildschirm (402; 502) angezeigt sind, der mit der Hintergrundbeleuchtungsanordnung gekoppelt ist, und zwar vor dem Beleuchten des optischen Codes.

## Revendications

1. Système de lecture de code optique, comprenant :
un écran d'affichage (402 ; 502) avec
une source de lumière étendue adaptée pour émettre de la lumière à faisceau étendu adaptée pour éclairer directement un code optique avec une lumière d'éclairage, la source de lumière étendue comprenant une structure de rétro-éclairage (402a ; 502a) ;
au moins une source de lumière ponctuelle directe (406 ; 506) adaptée pour éclairer le code optique avec une lumière à faisceau étroit ;
au moins un capteur d'image (405 ; 505) adapté pour détecter la lumière d'éclairage réfléchie par le code optique et générer des signaux associés à au moins une image du code optique ; et
au moins un processeur adapté pour traiter au moins une partie des signaux, générer une image décodable correspondant aux signaux et décoder au moins une partie de l'image décodable.

2. Système de lecture de code optique selon la revendication 1, dans lequel ledit au moins un processeur est en outre agencé pour actionner sélectivement au moins l'une de la source de lumière étendue et de ladite au moins une source de lumière ponctuelle directe (406 ; 506).

3. Système de lecture de code optique selon la revendication 2, dans lequel ledit au moins un processeur est en outre agencé pour déterminer au moins une propriété optique du code optique capturé, et la source de lumière étendue et ladite au moins une source de lumière ponctuelle directe (406 ; 506) sont actionnées sélectivement conformément à ladite au moins une propriété optique déterminée.

4. Système de lecture de code optique selon la revendication 2, dans lequel ledit au moins un processeur est adapté pour actionner alternativement la source de lumière étendue et ladite au moins une source de lumière ponctuelle directe (406 ; 506) pour des captures d'images consécutives respectives d'une succession de captures d'images par le système de lecture de code optique (400 ; 500).

5. Système de lecture de code optique selon la revendication 1, dans lequel ledit au moins un processeur est en outre agencé pour déterminer le type de code du code optique capturé, le type de code étant sélectionné dans le groupe comprenant : un type de code UPC, un type de code Data Matrix ou un type de code QR.

6. Système de lecture de code optique selon la revendication 1, dans lequel au moins une partie du système de lecture de code optique est agencée et dimensionnée pour être incluse dans un dispositif portable à la main (400 ; 500) comportant une lentille et un capteur d'image servant de caméra (405 ; 505) et un afficheur rétro-éclairé (402 ; 502) pour afficher des données et fournir la source de lumière étendue.

7. Système de lecture de code optique selon la revendication 6, dans lequel le dispositif portable à la main est un ordinateur portable à la main (400) ou un téléphone mobile (500).

8. Système de lecture de code optique selon la revendication 1, dans lequel la source de lumière étendue est en outre adaptée pour fournir un éclairage pour l'affichage de données sur l'écran d'affichage (402 ; 502) pour un utilisateur.

9. Système de lecture de code optique selon la revendication 1, comprenant en outre au moins une source de lumière ponctuelle directe (406 ; 506) positionnée derrière la source de lumière étendue pour éclairer le code optique avec une lumière à faisceau étroit.

10. Système de lecture de code optique selon la revendication 1, dans lequel la source de lumière étendue comprend une pluralité de diodes électroluminescentes, LED, et un conduit de lumière adapté pour recevoir de la lumière émise par la pluralité de LED et émettre la lumière à faisceau étendu.

11. Système de lecture de code optique selon la revendication 10, dans lequel au moins une partie de la pluralité de LED est conditionnée dans au moins une barre lumineuse de LED.

12. Système de lecture de code optique selon la revendication 1, comprenant en outre un écran LCD positionné devant ou derrière la source de lumière étendue.

13. Procédé pour lire un code optique sur une surface cible, comprenant les étapes suivantes :
fournir un écran d'affichage (402 ; 502) muni d'une structure de rétro-éclairage ;
contrôler l'émission d'une lumière à faisceau étendu et l'émission d'une lumière à faisceau étroit pour émettre sélectivement au moins l'une de la lumière à faisceau étendu et de la lumière à faisceau étroit ;
en fonction de l'étape de contrôle, émettre (604) à l'aide de la structure de rétro-éclairage (402a ; 502a) une lumière à faisceau étendu en direction du code optique pour éclairer directement le code optique avec une lumière d'éclairage ; et/ou
émettre (604) une lumière à faisceau étroit pour éclairer le code optique ;
détecter (606) la lumière d'éclairage réfléchie par le code optique ;
générer (608) au moins une image du code optique correspondant à la lumière détectée ; et
décoder (610) au moins une partie de ladite au moins une image.

14. Procédé selon la revendication 13, comprenant en outre une étape consistant à déterminer au moins une propriété optique du code optique capturé.

15. Procédé selon la revendication 13, dans lequel le code optique est un code UPC, un code Data Matrix ou un code QR.

16. Procédé selon la revendication 13, dans lequel l'étape de contrôle (622) comprend en outre le fait d'alterner entre l'émission de la lumière à faisceau étendu et l'émission de la lumière à faisceau étroit pour des captures d'images consécutives respectives d'une succession de captures d'images.

17. Procédé selon la revendication 13, comprenant en outre une étape (604) consistant à effacer des données affichées sur l'écran d'affichage (402 ; 502) couplé à la structure de rétro-éclairage avant d'éclairer le code optique.
